# EUROPEAN PATENT APPLICATION

(11) **EP 4 668 823 A1**
(43) Date of publication of application: **24.12.2025**
(21) Application number: 23921932.2
(22) Date of filing: 16.02.2023
(51) Int. Cl.: H04W 24/02

(54) **CHANNEL STATE INFORMATION REPORTING CONFIGURATION METHOD AND APPARATUS**

(71) Applicant: FUJITSU LIMITED, Kawasaki-shi, Kanagawa 211-8588 (JP)
(72) Inventor: ZHU, Jing, Beijing 100022 (CN); ZHANG, Lei, Beijing 100022 (CN)
(74) Representative: Haseltine Lake Kempner LLP
(86) International application number: PCT/CN2023/076642
(87) International publication number: WO 2024/168778

(57) **Abstract**

Embodiments of the present disclosure provide a channel state information report configuration method and apparatus. The method includes: a terminal equipment receives a first resource configuration, the first resource configuration being at least used for configuring first reference signal resources with M ports; the terminal equipment receives channel state information report configuration, wherein the channel state information report configuration is used to configure report of first channel state information and/or second channel state information, the first channel state information being associated with the first reference signal resources with the M ports, and the second channel state information being associated with second reference signal resources with N ports; where, N is less than M.

## Description

### TECHNICAL FIELD

Embodiments of the present disclosure relate to the technical field of communication.

### BACKGROUND

With the popularization of 5G in various industries and its application in more geographical regions, in order to handle more advanced services, very high data rates and denser networks are required, more antennas, greater bandwidths and more frequency bands are used, thereby energy consumption of a 5G device is getting greater and greater.

According to data statistics from operators, average energy consumption of a 5G base station is more than three times that of an LTE base station, and nearly 50% of the cost for deploying a 5G network by operators is electricity fee overhead. More importantly, even during periods when there is no service, the energy consumption cost of the 5G base station is still very high. Thus, network energy saving has important significance for enhancing sustainability of the environment, reducing impacts (for example reducing greenhouse gas emission) on the environment and saving operating costs, 5G network energy saving is an urgent problem to be solved.

In order to achieve network energy saving, Rel-18 initiated topics related to network energy saving to study various energy-saving technologies. In the discussion, network energy-saving technologies may be classified into types such as time-domain/frequency-domain/spatial-domain/energy-domain energy saving. Spatial-domain energy saving for example includes dynamical adjustment of the number of antennas, energy-domain energy saving for example includes dynamical adjustment of data transmission power, and time-domain energy saving for example includes introduction of cell DTX/DRX technologies, and so on. Using various energy-saving technologies can save a large amount of energy for a network device and/or a terminal equipment.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

However, the inventor finds that some scenarios of wireless communication applications (such as an energy-saving mode) might have negative impacts. For example, when a network device dynamically adjusts the number of antennas or transmission power, it may cause a change in a corresponding channel, resulting in an inaccurate or untimely measurement result of Channel State Information (CSI) from a terminal equipment or an inaccurate or untimely CSI report result thereof, ultimately affecting the transmission performance. How to perform CSI report configuration accurately and timely for the terminal equipment, so as to accurately perform CSI measurement and reporting, is a key problem that needs to be solved currently.

For at least one of the above problems, the embodiments of the present disclosure provide a channel state information report configuration method and apparatus.

According to one aspect of the embodiments of the present disclosure, a channel state information report configuration method is provided, including:
a terminal equipment receives a first resource configuration, the first resource configuration being at least used for configuring first reference signal resources with M ports; and
the terminal equipment receives channel state information (CSI) report configuration, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.

According to another aspect of the embodiments of the present disclosure, a channel state information report configuration apparatus is provided, including:
a receiving unit configured to receive a first resource configuration, the first resource configuration being at least used for configuring first reference signal resources with M ports,
the receiving unit being configured to further receive channel state information (CSI) report configuration, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.

According to a further aspect of the embodiments of the present disclosure, a channel state information report configuration method is provided, including:
a network device transmits a first resource configuration to a terminal equipment, the first resource configuration being at least used for configuring first reference signal resources with M ports; and
the network device transmits channel state information (CSI) report configuration to the terminal equipment, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.

According to another aspect of the embodiments of the present disclosure, a channel state information report configuration apparatus is provided, including:
a transmitting unit configured to transmit a first resource configuration to a terminal equipment, the first resource configuration being at least used for configuring first reference signal resources with M ports,
the transmitting unit being configured to further transmit channel state information (CSI) report configuration to the terminal equipment, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.

According to a further aspect of the embodiments of the present disclosure, a communication system is provided, including:
a network device configured to transmit a first resource configuration, the first resource configuration being at least used for configuring first reference signal resources with M ports, and transmit channel state information (CSI) report configuration, wherein the channel state information (CSI) report configuration is used to configure report of first channel state information (CSI) and/or second channel state information (CSI); and
a terminal equipment configured to receive the first resource configuration and the channel state information (CSI) report configuration, wherein the first channel state information (CSI) is associated with the first reference signal resources with the M ports, and the second channel state information (CSI) is associated with second reference signal resources with N ports; where, N is less than M.

One of advantageous effects of the embodiments of the present disclosure lies in: a terminal equipment receives channel state information (CSI) report configuration that is used to configure report of first channel state information (CSI) and/or second channel state information (CSI), the first channel state information (CSI) being associated with the first reference signal resources with M ports, and the second channel state information (CSI) being associated with second reference signal resources with N ports. Thereby, even in the case of resource adjustment (for example, for the purpose of energy saving), the terminal equipment is capable of performing CSI reporting efficiently and accurately without additionally increasing the number of channel state information (CSI) report configurations, so as to provide accurate channel information for the scheduling of the network device.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a communication system in the embodiments of the present disclosure;
FIG. 2 is a schematic diagram of a CDM pattern in the embodiments of the present disclosure;
FIG. 3 is a schematic diagram of port multiplexing in the embodiments of the present disclosure;
FIG. 4 is another schematic diagram of port multiplexing in the embodiments of the present disclosure;
FIG. 5 is an example diagram of resource adjustment in the embodiments of the present disclosure;
FIG. 6 is a schematic diagram of a channel state information report configuration method in the embodiments of the present disclosure;
FIG. 7 is an example diagram of a first reference signal resource and a second reference signal resource in the embodiments of the present disclosure;
FIG. 8 is another schematic diagram of a channel state information report configuration method in the embodiments of the present disclosure;
FIG. 9 is a schematic diagram of a channel state information report configuration apparatus in the embodiments of the present disclosure;
FIG. 10 is another schematic diagram of a channel state information report configuration apparatus in the embodiments of the present disclosure;
FIG. 11 is a schematic diagram of a network device in the embodiments of the present disclosure;
FIG. 12 is a schematic diagram of a terminal equipment in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of' or "a type of', but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and 5G, New Radio (NR), future 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femeto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described through the following examples, however the present disclosure is not limited to these.

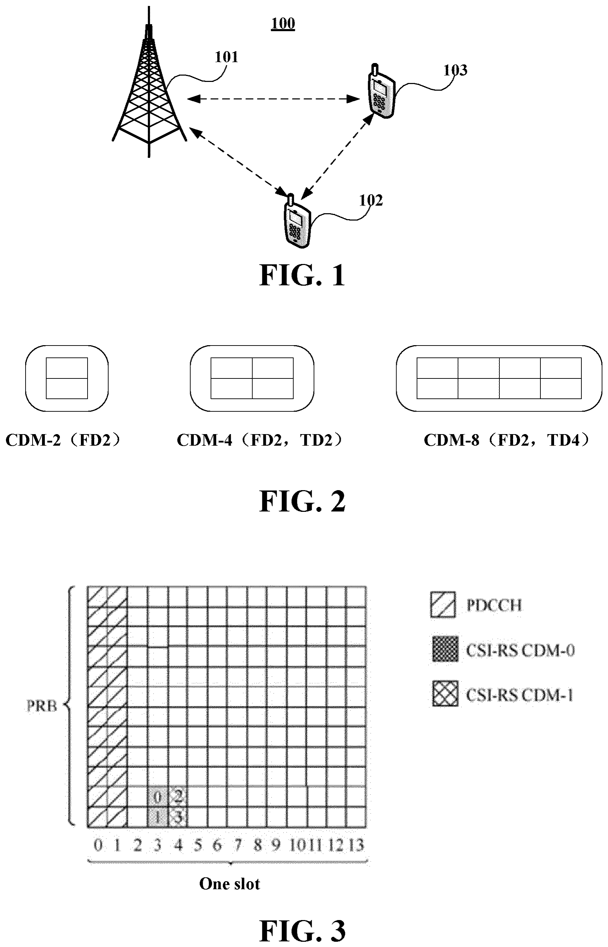

FIG. 1 is a schematic diagram of a communication system in the embodiments of the present disclosure, schematically describes situations by taking a terminal equipment and a network device as examples, as shown in FIG. 1, a communication system 100 may include a network device 101 and terminal equipments 102, 103. For simplicity, FIG. 1 only takes two terminal equipments and one network device as examples for description, however the embodiments of the present disclosure are not limited to this.

In the embodiments of the present disclosure, transmission of existing or further implementable services may be carried out between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are within the coverage of network device 101, but the present disclosure is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

In the embodiments of the present disclosure, higher layer signaling may be e.g. radio resource control (RRC) signaling; for example, is called an RRC message, for example includes an MIB, system information, and a dedicated RRC message; or is called an RRC information element (RRC IE). The higher layer signaling, for example, may further be Medium Access Control (MAC) signaling; or called a MAC control element (MAC CE). However, the present disclosure is not limited to this.

In a mobile communication system, generally a terminal equipment performs CSI (channel state information) measurement according to indication and configuration of a network device, and then reports CSI obtained by measurement to the network device. When the network device schedules the terminal equipment, it may refer to this CSI so as to adopt an appropriate transmission mode on an appropriate physical resource to schedule the terminal equipment to perform transmission. Different terminal equipments may experience different physical channel conditions. Adopting a CSI feedback mechanism may rationally and effectively utilize physical resources, thereby improving the efficiency of entire network transmission.

In the CSI feedback mechanism of NR, the terminal equipment mainly measures a reference signal from the network device based on CSI configuration and performs reporting, the reference signal includes a channel state information reference signal (CSI-RS), a synchronization signal block (SSB), etc. The CSI configuration of NR mainly includes: a resource configuration for CSI measurement, configured by the network device for the terminal equipment (which may be called a CSI-RS resource configuration), and a report configuration of how the terminal equipment performs reporting, configured by the network device (which may be called a CSI report configuration).

For example, the CSI-RS resource configuration mainly configures: time-frequency-spatial resources of CSI-RS resources, and necessary parameters for generating an RS sequence. In short, the terminal equipment is capable of accurately knowing an RS sequence transmitted by the network device and a specific time-frequency-spatial resource position of the sequence according to the CSI-RS resource configuration, so as to receive the sequence at a corresponding position and perform signal processing on a received sequence by taking a locally generated sequence as a reference to accurately estimate a channel. For how to specifically generate the RS sequence, relevant techniques may be referred to, detailed description is not provided here. Embodiments of the present disclosure will describe the CSI-RS resource configuration.

For a time-frequency position of each CSI-RS resource, the network device determines it via the following parameters in *CSI-RS-ResourceMapping,* as shown in Table 1 below.

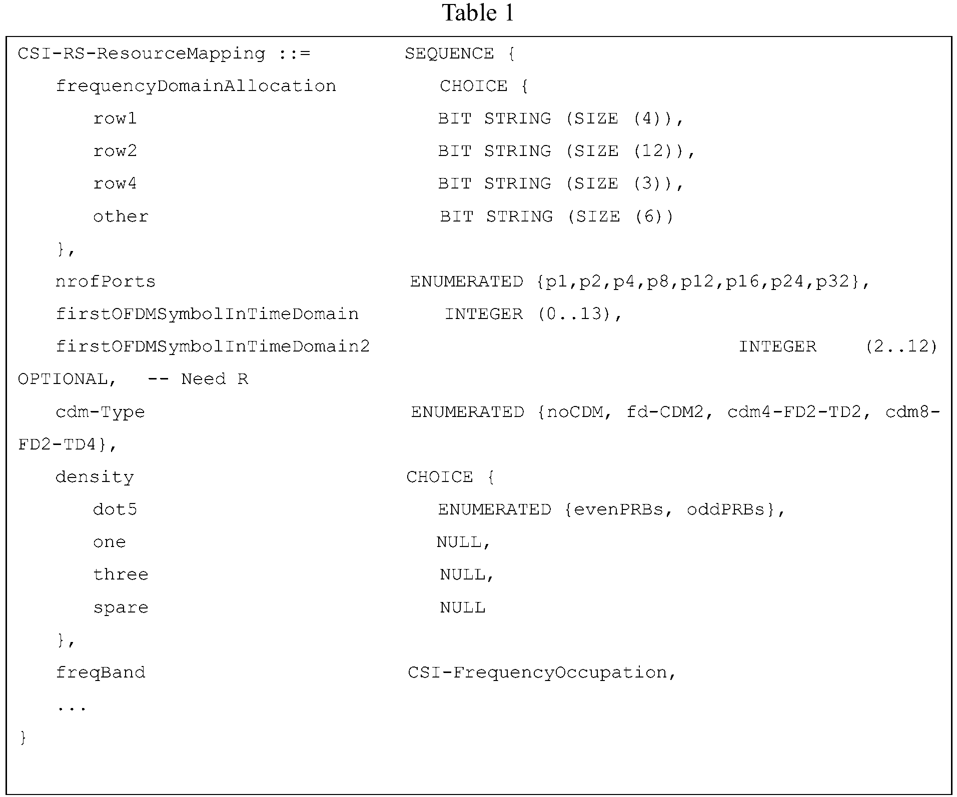

As shown in Table 1*, firstOFDMSymbolInTimeDomain* and *firstOFDMSymbolInTime Domain2* are used to determine positions of a CSI-RS resource in a time domain, NR currently support occupation of 1, 2 or 4 OFDM symbols. Parameter *frequencyDomainAllocation* is used to determine a position of the CSI-RS resource in a frequency domain. Parameter *nrofPorts* is used to determine the number of CSI-RS ports, NR currently supports configurations of 1, 2, 4, 8, 12, 16, 24 and 32 ports. Parameter *cdm-Type* is used to determine a type of Code Division Multiplexing (CDM) of the CSI-RS resource, NR currently supports three patterns i.e., CDM-2, CDM-4 and CDM-8.

FIG. 2 is a schematic diagram of a CDM pattern in the embodiments of the present disclosure. By taking CDM-4 as an example, this pattern includes 4 ports, each port occupies all resource elements (REs) in the pattern, and different orthogonal cover codes are adopted to distinguish between ports.

REs occupied by a CDM pattern constitute a CDM group, and each CDM group contains 2, 4 or 8 ports. In this way, a plurality of ports of a CSI-RS may be distributed into a plurality of CDM groups with the same pattern, that is, port distribution of the CSI-RS may be determined through CDM group aggregation.

NR supports multiple flexible aggregation schemes, and for the same port number configuration, supports multiple CDM aggregation schemes. NR flexibly supports a CSI-RS with 2 to 32 ports by using CDM group aggregation of three CDM patterns i.e., CDM-2, CDM-4 and CDM-8. For a multi-port CSI-RS resource, multiple multiplexing modes may be adopted between different ports.

FIG. 3 is a schematic diagram of port multiplexing in the embodiments of the present disclosure. As shown in FIG. 3, a CDM + TDM mode is used, a 4-port CSI-RS resource is aggregated using the CDM-2 pattern, divided into 2 CDM groups, each CSI-RS port in the CDM group is mapped onto 2 REs in this pattern, and orthogonal multiplexing is achieved between ports based on an orthogonal cover code (OCC) with a length being 2. Ports between CDM groups (such as ports 0, 1 and 2, 3) achieve orthogonality via TDM.

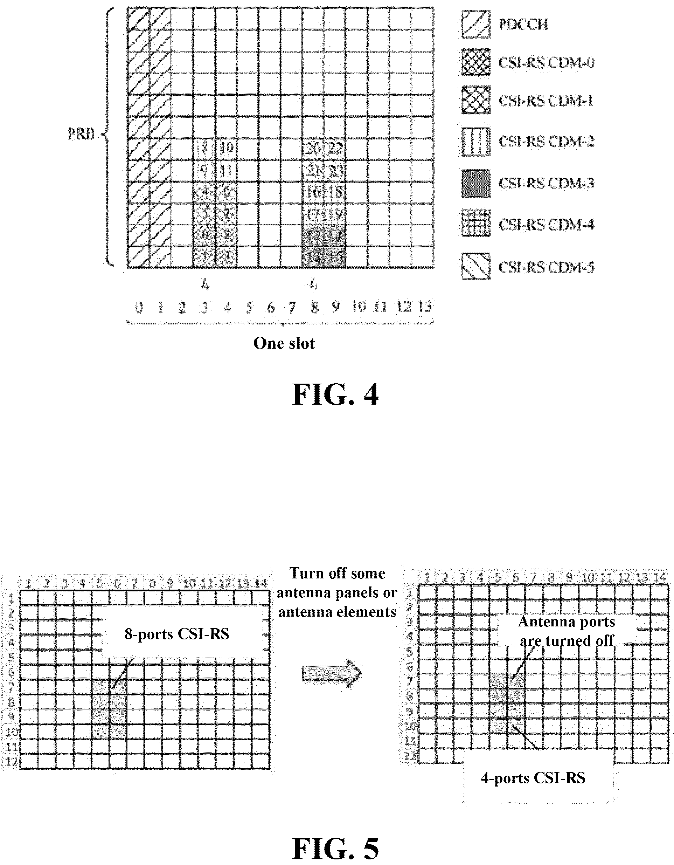

FIG. 4 is another schematic diagram of port multiplexing in the embodiments of the present disclosure. As shown in FIG. 4, a CDM + FDM + TDM mode is used, a 24-port CSI-RS resource is aggregated using the CDM-4 pattern, divided into 6 CDM groups. Orthogonal multiplexing is achieved between CSI-RS ports in each CDM group via an OCC with a length being 4. Orthogonal multiplexing is achieved between different CDM groups via TDM or FDM.

At present, the CSI-RS resource configuration is semi-statically configured via Radio Resource Control (RRC) signaling and generally does not change over a relatively long period of time. If these resources need to be changed, adjustment made be made via RRC reconfiguration. However, in some scenarios (such as energy-saving mode) of wireless communication applications, transmission power or the number of antennas, etc. may be adjusted, thus these resources may be changed.

FIG. 5 is an example diagram of resource adjustment in the embodiments of the present disclosure. For example, a network device initially configures an 8-port CSI-RS for channel measurement, etc. for a terminal equipment. Subsequently, the network device readjusts antenna configuration, for example, turning off some antenna panels or turning off some antenna elements, etc. After adjustment, the network device uses a 4-port CSI-RS to serve the terminal equipment. Due to a change in the antenna configuration, channels experienced by the 8-port CSI-RS before change and the 4-port CSI-RS after change are different.

This adjustment may be relatively static or may be relatively dynamic. In comparison, a relatively dynamic adjustment can achieve a better power-saving effect. This relatively dynamic adjustment may be of a slot level (taking a 15kHz subcarrier spacing as an example, 1 slot is 1ms), or may be of a symbol level (taking the 15kHz subcarrier spacing as an example, 1 symbol is approximately 71.4us).

When the network device dynamically adjusts a configuration (such as a CSI-RS port), a channel may undergo a sudden change (an equivalent channel response at a receiver side before and after adjustment is discontinuous). In this situation, if an existing CSI measurement and report mechanism is adopted, the terminal equipment is unable to know that a sudden change has occurred to perform accurate measurement and reporting. That is to say, the terminal equipment is unable to accurately implement CSI measurement and report; correspondingly, there is no accurate channel state information for scheduling decision at the network device side.

On the other hand, even if the network device performs relatively static configuration, the existing resource configuration for a CSI-RS is a dedicated configuration for the terminal equipment. If an existing configuration mechanism is adopted, the network device may need to configure all the terminal equipments it serves one by one after each adjustment. Considering the overhead of RRC configuration, this may lead to excessive signaling overhead, thereby affecting the network transmission efficiency and reducing a data transmission rate.

Therefore, how the network device accurately and timely performs CSI report configuration, so that the terminal equipment can efficiently and accurately perform CSI reporting even in a case of resource adjustment (for example, for the purpose of energy saving), has become a problem that needs to be solved.

In the embodiments of the present disclosure, by taking the reference signal being a CSI-RS as an example, the reference signal resource may also be called a CSI-RS resource, and the resource configuration may also be called CSI-RS resource configuration; the present disclosure is not limited to this. Furthermore, the embodiments of the present disclosure are described by taking energy saving as an example, but are not limited to this, and may be applied to any scenario involving CQI calculation or CSI measurement.

### Embodiments of a first aspect

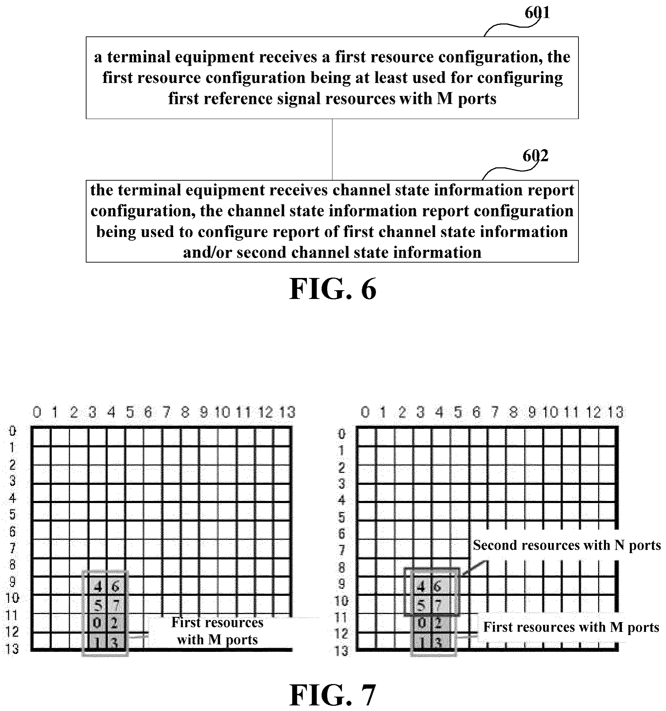

Embodiments of the present disclosure provide a CSI report configuration method, which is described from a terminal equipment side. FIG. 6 is a schematic diagram of a CSI report configuration method in the embodiments of the present disclosure. As shown in FIG. 6, the method includes:
601, a terminal equipment receives a first resource configuration, the first resource configuration being at least used for configuring first reference signal resources with M ports; and
602, the terminal equipment receives channel state information (CSI) report configuration, the channel state information (CSI) report configuration is used to configure report of first channel state information (CSI) and/or second channel state information (CSI), wherein the first channel state information (CSI) is associated with the first reference signal resources with the M ports, and the second channel state information (CSI) is associated with second reference signal resources with N ports; where, N is less than M.

It should be noted that the above FIG. 6 only schematically describes the embodiments of the present disclosure, but the present disclosure is not limited to this. For example, an execution order of each operation may be adjusted appropriately, moreover other some operations may be added or one or more operations may be removed. Persons skilled in the art may make appropriate modifications according to the above contents, not limited to the records in the above FIG. 6.

For example, the first resource configuration and the CSI report configuration may be carried by the same RRC signaling or by different pieces of RRC signaling. For another example, the first resource configuration and the CSI report configuration may be two different configurations or may be included in the same configuration. Embodiments of the present disclosure do not impose limitations in this regard.

In the embodiments of the present disclosure, a terminal equipment receives channel state information (CSI) report configuration that is used to configure report of first channel state information (CSI) and/or second channel state information (CSI), the first channel state information (CSI) being associated with the first reference signal resources with the M ports, and the second channel state information (CSI) being associated with second reference signal resources with N ports. Thereby, even in the case of resource adjustment (for example, for the purpose of energy saving), the terminal equipment is capable of performing CSI reporting efficiently and accurately without additionally increasing the number of channel state information (CSI) report configurations, so as to provide accurate channel information for the scheduling of the network device.

In some embodiments, the channel state information (CSI) report configuration is per cell and/or per component carrier (per CC). For example, the CSI report configurations are different for different cells. For another example, the CSI report configurations are different for different CCs. The present disclosure is not limited to this.

In some embodiments, the channel state information (CSI) report may be periodic or may be semi-persistent.

In some embodiments, the first reference signal resources with the M ports and the second reference signal resources with the N ports are NZP CSI-RS resources for channel measurement.

For example, one of feasible solutions for network energy saving is to dynamically adjust a port. Reference signal resource of a port that needs to be dynamically adjusted is a channel measurement based non-zero power CSI-RS resource. Moreover, for CSI-RS resources based on TRS measurement (corresponding to a higher-layer parameter trs_info) and beam management (corresponding to a higher-layer parameter repetition which is configured as on or off), since the number of ports is relatively small, a port adjustment operation is not required.

In some embodiments, the first reference signal resources and/or the second reference signal resources are at least time-domain resources and/or frequency-domain resources and/or spatial-domain resources for transmitting or receiving reference signals.

In some embodiments, the second reference signal resources with the N ports are a part of the first reference signal resources with the M ports.

For example, the second reference signal resources with the N ports are time-domain resources and/or frequency-domain resources and/or spatial-domain resources corresponding to some ports of the first reference signal resources with the M ports. In a network energy-saving scenario, a terminal equipment may be configured with more than one CSI-RS resource in a channel measurement resource set in the CSI report configuration (CSI-ReportConfig). One of the second reference signal resources with the N ports correspond to a spatial element/port muting mode, or a spatial element/port configuration.

The following text first describes how to determine the first reference signal resources with the M ports and the second reference signal resources with the N ports.

In some embodiments, a first parameter for configuring the first reference signal resources with the M ports at least includes one of the following parameters: the number M (nrofPort) of ports, a parameter for determining a position of a time-domain resource, or a parameter for determining a position of a frequency-domain resource.

For example, the parameter for determining a position of a time-domain resource is time-domain position information (firstOFDMSymbolInTimeDomain) of a first OFDM symbol included in the first reference signal resources, and the parameter for determining a position of a frequency-domain resource is frequency-domain allocation information (frequencyDomainAllocation) of the first reference signal resources.

In some embodiments, the terminal equipment determines the first reference signal resources with the M ports based on a first resource configuration, a value of M is determined by the parameter *nrofPort,* and the first reference signal resources with the M ports represent time-frequency-spatial resources corresponding to all ports in the first resource configuration. The second reference signal resources with the N ports may be determined via the first reference signal resources with the M ports.

FIG. 7 is an example diagram of a first reference signal resource and a second reference signal resource in the embodiments of the present disclosure. For example, ports 0 to 3 and ports 4 to 7 in a 8-port first reference signal resource correspond to different antenna panels and are respectively powered independently. When a base station turns off power switches corresponding to ports 0 to 3, circuits corresponding to ports 4 to 7 still operate normally, a 4-port second resource after an antenna is turned off is a time-frequency-spatial resource corresponding to ports 4 to 7 of the 8-port first reference signal resource before the antenna is turned off. Therefore, the terminal equipment may determine the second reference signal resources with the N ports via time-frequency-spatial resources corresponding to some ports of the first reference signal resources with the M ports.

The following text then describes how to determine the second reference signal resources with the N ports.

In some embodiments, the terminal equipment determines the first reference signal resources with the M ports according to the first parameter; and the terminal equipment determines the second reference signal resources with the N ports according to the first parameter and a second parameter, wherein the second parameter is included in the first resource configuration and/or the CSI report configuration.

In some embodiments, the second parameter is included in the first resource configuration. For example, it may be included in Resource Setting (such as CSI-ResourceMapping), or in ResourceSet (such as nzp-CSI-ResourceSet), or in Resource (such as nzp-CSI-Resource), or in CSI-RS-ResourceMapping.

In some embodiments, the second parameter is included in the CSI report configuration, i.e., included in CSI-ReportConfig.

In some embodiments, at least one second reference signal resource may be determined according to the first resource configuration. The second parameter is used to indicate that N ports in the M ports of the first reference signal resources are the second reference signal resources; or the second parameter indicates or enables the resources corresponding to some ports in the first reference signal resources with the M ports as the second reference signal resources with the N ports.

For example, the second parameter is X bits, the X bits being used to represent N continuous or discontinuous ports in the M ports. The X bits for example are indicated by adopting a bitmap mode.

For another example, a list with a length being L is predefined or preconfigured, each row in the list represents a value of the N ports in the M ports, and the X bits are used to indicate an index of the list, X=log2(L).

For another example, the second parameter is an SLIV parameter, the SLIV parameter being used to represent continuous N ports in the M ports. For example, the second parameter is used to represent a starting port index and a port length of the continuous N ports. For example, it indicates {starting port index, number/length of ports}.

For another example, the second parameter is a value, the value indicating that some resources in the first reference signal resources with the M ports are the second reference signal resources with the N ports.

For another example, the second parameter is a numerical value or a proportional value, the numerical value or the proportional value indicating that some resources in the first reference signal resources with the M ports are the second reference signal resources with the N ports.

For another example, the second parameter may be used for enabling, such as EsEnable. When a network device configures this parameter, it indicates that the second resources with the N ports are resources corresponding to some ports in the current first resources with M ports. Specifically, which ports in the M ports are N ports may be determined via a pre-defined rule or a pre-configuration (RRC configuration) mode.

In some embodiments, the terminal equipment determines the first reference signal resources with the M ports according to the first parameter; the terminal equipment determines the second reference signal resources with the N ports according to the first parameter and a third parameter, wherein the third parameter is included in the second resource configuration.

For example, the third parameter includes the aforementioned second parameter and/or CSI-RS resource configuration index information of reference resources.

In some embodiments, the terminal equipment determines the first reference signal resources with the M ports according to the first parameter; the terminal equipment determines the second reference signal resources with the N ports according to the first parameter and a fourth parameter, the fourth parameter being included in the second resource configuration.

For example, the fourth parameter is used to indicate a time-frequency position of the second reference signal resources with the N ports, and at least includes: a parameter for determining a time-domain position of a first OFDM symbol (firstOFDMSymbolInTime Domain), a parameter for determining a time-domain position of a second OFDM symbol (secondOFDMSymbolInTimeDomain), a parameter for determining a position of a frequency-domain resource (frequencyDomainAllocation).

In some embodiments, the first resource configuration, the second resource configuration or the channel state information (CSI) report configuration is carried by radio resource control (RRC) signaling and/or a media access control (MAC) control element (CE).

The above text schematically describes the reference signal resource configuration, etc. On this basis, CSI report configuration and CSI report are then described. In the following description, the first reference signal resources with the M ports and the second reference signal resources with the N ports may be based on one reference signal resource configuration (the first resource configuration as mentioned above), or may be based on two reference signal resource configurations (such as the first resource configuration and the second resource configuration as mentioned above, or two independent resource configurations), the first reference signal resources with the M ports and/or the second reference signal resources with the N ports is/are associated with channel state information report configuration.

In some embodiments, the terminal equipment performs first CSI measurement based on the first reference signal resources with the M ports to generate the first CSI; and the terminal equipment performs second CSI measurement based on the second reference signal resources with the N ports to generate the second CSI.

In some embodiments, the channel state information (CSI) report configuration includes first information, the first information being used for configuring or indicating the first reference signal resources with the M ports and/or the second reference signal resources with the N ports.

For example, the first information may be at least one of the aforementioned first parameter, second parameter, third parameter or fourth parameter, or may be any combination of these parameters; however, the present disclosure is not limited to this. The first information is associated with the first resource configuration and/or the second resource configuration, for example, the first information is an index of the first resource configuration, or an index of the second resource configuration, and so on.

In some embodiments, the channel state information (CSI) report configuration further includes second information, the second information being used to indicate the number of pieces of channel state information (CSI).

Embodiments of the present disclosure support that one CSI report includes multiple pieces of CSI.

In some embodiments, the multiple pieces of CSI correspond to different CSI-RS port number configurations, that is, correspond to different spatial-domain element muting modes, or, correspond to different spatial-domain element configurations. Alternatively, the multiple pieces of CSI correspond to different downlink transmission power configurations, that is, correspond to different energy-domain element configurations.

In some embodiments, a CSI report setting (CSI-ReportConfig) includes configurations of multiple pieces of CSI, each configuration corresponds to a CSI-RS port configuration, or each configuration corresponds to a spatial-domain element muting mode, or each configuration corresponds to a spatial-domain element configuration.

Alternatively, a CSI report setting (CSI-ReportConfig) includes configurations of multiple pieces of CSI, each configuration corresponds to a downlink transmission power configuration, or each configuration corresponds to an energy-domain element configuration.

For example, if there are at least two pieces of CSI in the CSI report, the second information may be used to determine the number of pieces of CSI included in the CSI report; if the CSI report includes only one piece of CSI, the second information may be omitted.

For another example, when the number of CSI measurement resources included in the CSI report configuration is 1, the second information may be default to indicate that the number of pieces of CSI is 1. When the number of CSI measurement resources included in the CSI report configuration is greater than 1, based on a pre-defined rule or pre-configuration information, the second information is default, which indicates that the number of CSI results is the same as the number of CSI measurement resources, or the number of pieces of CSI is 1.

In some embodiments, the channel state information (CSI) report configuration further includes third information, the third information being used to indicate a mapping relationship between the channel state information (CSI) and channel state information (CSI) reference signal resources.

For example, when the CSI report configuration includes at least two CSI results, the third information is used to determine a mapping relationship between a CSI result and a CSI measurement resource. For example, in the CSI report configuration, the first information determines the first reference signal resources with the M ports, the second reference signal resources with L ports and the second reference signal resources with S ports. The second information determines that the number of CSI results is 2. The third information determines that the first CSI result is associated with the second reference signal resources with the L ports, and the second CSI result is associated with the second reference signal resources with the S ports.

For another example, when the number of CSI measurement resources included in the CSI report configuration is 1, the third information may be default. When the number of CSI measurement resources included in the CSI report configuration is greater than l and the number of resources is the same as the number of CSI results in the second information, a pre-defined rule may be used to determine a mapping relationship, for example, they are arranged in ascending order according to index values for one-to-one correspondence, in this situation, the third information may be default.

In some embodiments, the channel state information (CSI) report configuration further includes fourth information, the fourth information being used to indicate a channel state information (CSI) feedback quantity. The channel state information feedback quantity indicated by the fourth information is different from a channel state information feedback quantity to which the first resource configuration corresponds.

For example, when the CSI report configuration includes at least two CSI results, the fourth information is used to determine a CSI feedback quantity (Report Quantity). For example, a CSI feedback quantity may be defined as CRI1-RI1-PMI1-PMI2-CQI1-CQI2. The terminal equipment measures the first reference signal resources with the M ports to obtain CRI1, RI1, PMI1 and CQI1, and measures the second reference signal resources with the N ports to obtain PMI2 and CQI2, and by default, CRI and RI results obtained by measuring the two resources are the same. Therefore, the terminal equipment only needs to report CRI and RI corresponding to the first reference signal resources with the M ports.

In some embodiments, the terminal equipment determines at least one of the following according to a preset rule and/or a predetermined parameter: the number of pieces of channel state information (CSI) report, a mapping relationship between channel state information (CSI) report and a channel state information (CSI) reference signal resource, a type of a feedback quantity of channel state information (CSI), or a type of field mapping of channel state information (CSI).

For example, pre-defined information is used to determine a newly added CSI feedback quantity (Report Quantity). For example, a CSI feedback quantity may be defined as CRI1-RI1-PMI1-PMI2-CQI1-CQI2, indicating that the CSI report includes two CSI results, CRI1, RI1, PMI1 and CQI1 correspond to a first CSI result, and PMI2 and CQI2 correspond to a second CSI result.

For another example, pre-defined information is used to determine a CSI field mapping sequence of a newly added CSI feedback quantity (Report Quantity) type. If a CSI feedback quantity is newly added, for example, CRI1-RI1-PMI1-PMI2-CQI1-CQI2 is newly added, a specific CSI field mapping situation corresponding to this CSI feedback quantity should be described, i.e., the number of bits occupied by each feedback quantity, such as the number of bits occupied by CRI1, the number of bits occupied by RI1, etc.

In some embodiments, the second reference signal resources with the N ports and/or the second CSI associated with them may be configured via UE-specific signaling, or may be configured via cell-specific or group-specific signaling. The signaling, for example, may be RRC, an MAC CE or DCI, etc.

By taking the second parameter mentioned above as an example, for example, the second parameter may indicate the second reference signal resources with the N ports by numerical or proportional or enabling means. The second parameter may be transmitted simultaneously to multiple terminal equipments via a group-based RRC signaling, that is, the signaling is cell-specific or group UEs-specific. For example, the second parameter is used to represent a numerical value, proportion or enable, without specifically indicating the number of ports. Second parameter values of multiple terminal equipments are totally the same and may be transmitted to multiple terminal equipments via a group signaling.

The above has been described by taking the second parameter as an example, but the present disclosure is not limited to this. For example, the group signaling may include any one or any combination of the first to fourth parameters, the first information to the fourth information mentioned above, or may further include parameters for selecting a pre-defined scheme, and so on. Via cell-specific signaling or group-specific signaling, the network device may configure multiple terminal equipments at once, thus signaling overhead may be saved.

The following text schematically describes CSI report.

In some embodiments, the terminal equipment performs CSI reporting, a CSI report including the first channel state information and/or the second channel state information.

In some embodiments, in a case where the first reference signal resources with the M ports overlap with the second reference signal resources with the N ports, the CSI report includes the first channel state information and the second channel state information.

For example, the second reference signal resources with the N ports are a part of the first reference signal resources with the M ports, which is based on the first resource configuration. The terminal equipment receives one CSI report configuration, the CSI report configuration is simultaneously associated with the first reference signal resources with the M ports and the second reference signal resources with the N ports. The terminal equipment feeds back two CSI results based on the CSI report configuration, respectively being a measurement result based on the first reference signal resources with the M ports and a measurement result based on the second reference signal resources with the N ports.

In some embodiments, in a case where the first reference signal resources with the M ports overlap with the second reference signal resources with the N ports, the CSI report includes the second channel state information.

For example, the second reference signal resources with the N ports are a part of the first reference signal resources with the M ports, which is based on the first resource configuration. The terminal equipment receives one CSI report configuration, the first CSI report configuration is simultaneously associated with the first reference signal resources with the M ports and the second reference signal resources with the N ports, and the terminal equipment feeds back one CSI result based on the CSI report configuration. For example, the terminal equipment may determine the CSI report includes a measurement result based on the first reference signal resources with the M ports, or includes a measurement result based on the second reference signal resources with the N ports, according to indication information of DCI and/or a pre-defined rule.

In some embodiments, in a case where the first reference signal resources with the M ports do not overlap with the second reference signal resources with the N ports, the CSI report includes the first channel state information and the second channel state information.

For example, the first reference signal resources with the M ports and the second reference signal resources with the N ports are based on two independent resource configurations. The terminal equipment receives one CSI report configuration, the first CSI report configuration is simultaneously associated with the first reference signal resources with the M ports and the second reference signal resources with the N ports. The terminal equipment feeds back two CSI results based on the CSI report configuration, respectively being a measurement result based on the first reference signal resources with the M ports and a measurement result based on the second reference signal resources with the N ports.

The above text schematically describes how to perform CSI reporting. The following text then schematically describes how to confirm, trigger or switch.

In some embodiments, the terminal equipment determines the first reference signal resources with the M ports and the second reference signal resources based on RRC configuration, and determines that the CSI measurement resource is a first resource with the M ports and a second resource with the N ports. The terminal equipment may measure two resources simultaneously, which means that the terminal equipment configures corresponding resources for different ports of the same resource to perform measurement. The different port configurations correspond to different spatial-domain element muting modes or spatial-domain element configurations.

In some embodiments, the terminal equipment receives fifth information and/or sixth information, and determines use of the first reference signal resources with the M ports and/or the second reference signal resources with the N ports to perform channel state information (CSI) reporting according to the fifth information and/or sixth information.

For example, the fifth information is carried via downlink control information (DCI) and/or a media access control (MAC) control element (CE), the fifth information may be carried via UE-specific signaling or may be carried via group common signaling, the group common signaling being used to transmit information to multiple terminal equipments simultaneously; the sixth information is carried via radio resource control (RRC) signaling and/or a media access control (MAC) control element (CE). The sixth information may be configured via UE-specific signaling, or may be configured via cell-specific or group-specific signaling.

Thereby, the terminal equipment may determine, for example based on DCI, that the CSI measurement resource is a first resource with the M ports, or is a second resource with the N ports, or both a first resource with the M ports and a second resource with the N ports, or determine that the terminal reports the first CSI, or the second CSI, or reports both the first CSI and the second CSI simultaneously. After configuring the first reference signal resources and the second reference signal resources via e.g. RRC, and then confirming, indicating, triggering or switching via e.g. DCI, the network device is able to further dynamically indicate the terminal equipment to perform CSI reporting, and the CSI reporting can be more efficient and accurate.

In some embodiments, the fifth information is used to indicate at least one of the following: a network state, that a terminal equipment performs channel state information (CSI) measurement, that the terminal equipment performs channel state information (CSI) measurement by using the first reference signal resources with the M ports, that the terminal equipment performs channel state information (CSI) measurement by using the second reference signal resources with the N ports, update/adjustment/switching of a CSI-RS resource, adjustment/ switching of CSI report configuration, CSI-RS port adjustment, CSI-RS port activation/deactivation indication, CSI-RS port enable indication, CSI measurement adjustment, a discontinuous reception related indication, or a discontinuous transmission related indication.

The fifth information indicating the update/adjustment/switching of the channel state information report may be used to indicate the number of channel information reports and/or specific channel state information after the update/adjustment/switching, the specific channel state information being the first channel state information and/or the second channel state information.

In some embodiments, the sixth information is used to indicate at least one of the following: a timer/counter related to a network state, a discontinuous reception period configuration related to a network state, or a discontinuous transmission period configuration related to a network state.

In some embodiments, the network state indicates at least one of the following: a first mode, a second mode, switching from the first mode to the second mode, switching from the second mode to the first mode, time-domain element adjustment, spatial-domain element adjustment, or energy-domain element adjustment.

For example, the first mode is at least one of the following: an energy-saving mode, a power-saving mode, a sleep mode, an abnormal mode, an inactive mode, a mode after a network device adjusts a CSI-RS port, or a first configuration manner of a CSI-RS port. The second mode is at least one of the following: a non-energy-saving mode, a non-power-saving mode, a non-sleep mode, a normal mode, an active mode, a mode before a network device adjusts a CSI-RS port, or a second configuration manner of a CSI-RS port.

For another example, the spatial-domain element indicates at least one of the following: an antenna port, a logical port, a reference signal port, an antenna factor, an antenna element, or an antenna unit. The energy-domain element indicates at least one of the following: energy per resource element of a physical downlink shared channel (PDSCH), or energy per resource element of a channel state information reference signal.

The fifth information may be used in a scenario of dynamic antenna element adjustment in a network energy-saving technology, and the sixth information may be used in a scenario of semi-persistent or semi-static antenna element adjustment in a network energy-saving technology. In the scenarios, the fifth and/or sixth information may be used for indication/switching of CSI, that is, for indication/switching of a muting mode/scheme of an antenna element.

For example, in a network energy-saving scenario, a base station is respectively configured with first CSI, second CSI, third CSI and fourth CSI, which are associated with 32-ports, 16-ports, 8-ports and 4-ports CSI-RS respectively, the 32-ports CSI-RS is a first resource (called resource 1), the 16-ports, 8-ports and 4-ports CSI-RS are second resources (called resource 2, resource 3 and resource 4 respectively). The first CSI, the second CSI, the third CSI and the fourth CSI respectively correspond to different antenna element muting modes/configurations/mechanisms. The antenna element muting may be replaced by port muting, antenna on/off switching, etc.

The terminal equipment may perform CSI measurement based on a 32-ports CSI-RS and report the first CSI, or the terminal equipment may simultaneously perform CSI measurement based on 32-ports, 16-ports, 8-ports and 4-ports CSI-RS and report the first CSI, second CSI, third CSI and fourth CSI.

The fifth information and/or the sixth information are used for switching of CSI. For example, in an initial state, the terminal reports CSI corresponding to a 32-ports CSI-RS. The terminal equipment receives the fifth information (DCI signaling 1), the DCI signaling l indicating the terminal to report two pieces of CSI, respectively the second CSI and the third CSI, and the terminal equipment performs reporting of the second CSI and the third CSI. After some time, the terminal receives the fifth information (DCI signaling 2), the DCI signaling 2 indicating the terminal equipment to report three pieces of CSI, respectively the second CSI, the third CSI and the fourth CSI, and the terminal equipment performs reporting of the second CSI, the third CSI and the fourth CSI.

Or, in an initial state, the terminal reports CSI corresponding to a 32-ports CSI-RS. The terminal equipment acquires the sixth information (a timer expires or restarts), and the terminal equipment performs reporting of the second CSI and the third CSI based on a pre-defined rule or pre-configuration information. After some time, the terminal acquires the sixth information (the timer restarts or expires), and the terminal equipment performs reporting of the first CSI.

The first CSI, the second CSI, the third CSI and the fourth CSI may be included in the same CSI report configuration (CSI-ReportConfig), or may be included in different CSI report configurations (CSI-ReportConfig).

For example, the fifth information is carried based on DCI signaling. When the first CSI, the second CSI, the third CSI and the fourth CSI are respectively included in different CSI report configurations, the fifth information is used to simultaneously activate/deactivate multiple different semi-persistent or aperiodic CSI reports, which saves DCI signaling overhead compared with existing technologies. When the first CSI, the second CSI, the third CSI and the fourth CSI are respectively included in the same CSI report configuration, the fifth information is used to indicate the number of CSI reports and specific CSI included in the CSI report configuration.

In some embodiments, the second reference signal resources with the N ports may further be a zero value, that is, a network device does not transmit a CSI-RS. When the terminal equipment acquires the fifth information and/or the sixth information, the terminal equipment does not receive a CSI-RS, and does not perform any CSI measurement and CSI reporting.

For example, when the terminal equipment receives the fifth information or acquires the sixth information (a timer expires), the terminal equipment knows that the network device does not transmit a CSI-RS and performs skip processing or muting processing, the terminal equipment does not receive the CSI-RS and does not perform CSI measurement and CSI reporting.

In some embodiments, carrying the fifth information may follow existing signaling, for example, triggering DCI signaling of a PUSCH-based semi-persistent CSI reporting or aperiodic CSI reporting, or new signaling may further be defined.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, a terminal equipment receives channel state information (CSI) report configuration that is used to configure report of first channel state information (CSI) and/or second channel state information (CSI), the first channel state information (CSI) being associated with the first reference signal resources with the M ports, and the second channel state information (CSI) being associated with second reference signal resources with N ports. Thereby, even in the case of resource adjustment (for example, for the purpose of energy saving), the terminal equipment is capable of performing CSI reporting efficiently and accurately without additionally increasing the number of channel state information (CSI) report configurations, so as to provide accurate channel information for the scheduling of the network device.

### Embodiments of a second aspect

Embodiments of the present disclosure provide a CSI report configuration method, which is described from a network device side, contents same as the embodiments of the first aspect are not repeated.

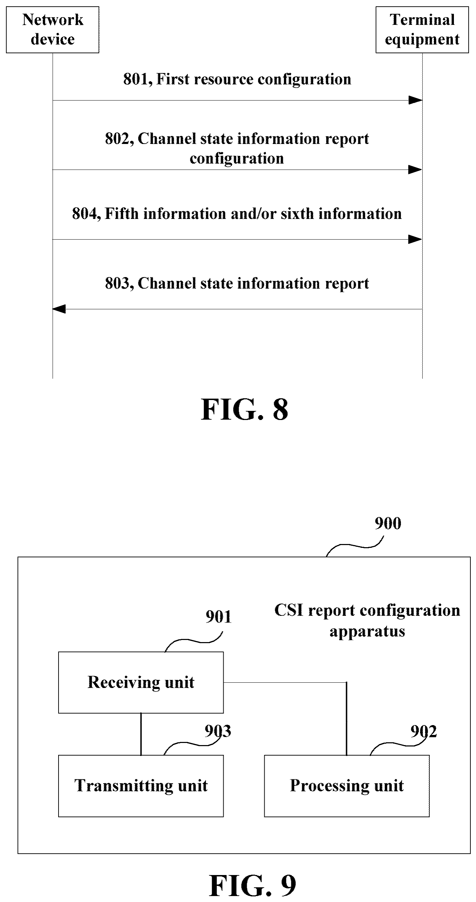

FIG. 8 is a schematic diagram of a CSI report configuration method in the embodiments of the present disclosure. As shown in FIG. 8, the method includes:
801, a network device transmits a first resource configuration to a terminal equipment, the first resource configuration being at least used for configuring first reference signal resources with M ports; and
802, the network device transmits channel state information (CSI) report configuration to the terminal equipment, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.

It should be noted that the above FIG. 8 only schematically describes the embodiments of the present disclosure, but the present disclosure is not limited to this. For example, an execution order of each operation may be adjusted appropriately, moreover other some operations may be added or one or more operations may be removed. Persons skilled in the art may make appropriate modifications according to the above contents, not limited to the records in the above FIG. 8.

For example, the first resource configuration and the CSI report configuration may be carried by the same RRC signaling or by different pieces of RRC signaling. For another example, the first resource configuration and the CSI report configuration may be two different configurations or may be included in the same configuration. Embodiments of the present disclosure do not impose limitations in this regard.

In some embodiments, the channel state information (CSI) report configuration includes first information, the first information being used for configuring or indicating the first reference signal resources with the M ports and/or the second reference signal resources with the N ports.

In some embodiments, the first information is associated with the first resource configuration and/or the second resource configuration.

In some embodiments, the channel state information (CSI) report configuration further includes second information, the second information being used to indicate the number of pieces of channel state information (CSI).

In some embodiments, the channel state information (CSI) report configuration further includes third information, the third information being used to indicate a mapping relationship between the channel state information (CSI) and channel state information (CSI) reference signal resources.

In some embodiments, the channel state information (CSI) report configuration further includes fourth information, the fourth information being used to indicate a channel state information (CSI) feedback quantity.

In some embodiments, the channel state information feedback quantity indicated by the fourth information is different from a channel state information feedback quantity to which the first resource configuration corresponds.

In some embodiments, as shown in FIG. 8, the method may further include:
803, the network device receives CSI report from the terminal equipment, the CSI report including the first channel state information and/or the second channel state information.

In some embodiments, in a case where the first reference signal resources with the M ports overlap with the second reference signal resources with the N ports, the CSI report includes the first channel state information and the second channel state information.

In some embodiments, in a case where the first reference signal resources with the M ports overlap with the second reference signal resources with the N ports, the CSI report includes the second channel state information.

In some embodiments, in a case where the first reference signal resources with the M ports do not overlap with the second reference signal resources with the N ports, the CSI report includes the first channel state information and the second channel state information.

In some embodiments, the first resource configuration and/or the channel state information (CSI) report configuration is/are carried by radio resource control (RRC) signaling and/or a media access control (MAC) control element (CE).

In some embodiments, as shown in FIG. 8, the method may further include:
804, the network device transmits fifth information and/or sixth information to the terminal equipment;
wherein the terminal equipment determines channel state information (CSI) report associated with the first reference signal resources with the M ports and/or the second reference signal resources with the N ports according to the fifth information and/or sixth information.

In some embodiments, the fifth information is carried by downlink control information (DCI) and/or a media access control (MAC) control element (CE), and the sixth information is carried by RRC and/or a media access control (MAC) control element (CE).

In some embodiments, the fifth information is used to indicate at least one of the following: a network state, that a terminal equipment performs channel state information (CSI) reporting, that the terminal equipment performs channel state information (CSI) reporting associated with the first reference signal resources with the M ports, that the terminal equipment performs channel state information (CSI) reporting associated with the second reference signal resources with the N ports, update/adjustment/switching of channel state information (CSI) report setting, update/adjustment/switching of CSI-RS resource configuration, CSI-RS port adjustment, CSI-RS port activation/deactivation indication, CSI-RS port enable indication, CSI measurement adjustment, a discontinuous transmission indication, or a discontinuous reception indication; and
the sixth information is used to indicate at least one of the following: a timer/counter related to a network state, a discontinuous transmission period configuration related to a network state, or a discontinuous reception period configuration related to a network state.

In some embodiments, the network state indicates at least one of the following: a first mode, a second mode, switching from the first mode to the second mode, switching from the second mode to the first mode, time-domain element adjustment, spatial-domain element adjustment, or energy-domain element adjustment.

In some embodiments, the first mode is at least one of the following: an energy-saving mode, a power-saving mode, a dormant mode, an abnormal mode, or an inactive mode; and the second mode is at least one of the following: a non-energy-saving mode, a non-power-saving mode, a non-dormant mode, a normal mode, or an active mode.

In some embodiments, the spatial-domain element indicates at least one of the following: an antenna port, a logical port, a reference signal port, an antenna factor, an antenna element, or an antenna unit; and the energy-domain element indicates at least one of the following: energy per resource element of a physical downlink shared channel (PDSCH), or energy per resource element of a channel state information reference signal.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, a terminal equipment receives channel state information (CSI) report configuration that is used to configure report of first channel state information (CSI) and/or second channel state information (CSI), the first channel state information (CSI) being associated with the first reference signal resources with the M ports, and the second channel state information (CSI) being associated with second reference signal resources with N ports. Thereby, even in the case of resource adjustment (for example, for the purpose of energy saving), the terminal equipment is capable of performing CSI reporting efficiently and accurately without additionally increasing the number of channel state information (CSI) report configurations, so as to provide accurate channel information for the scheduling of the network device.

### Embodiments of a third aspect

Embodiments of the present disclosure provide a CSI report configuration apparatus. The apparatus for example may be a terminal equipment, or may be one or more parts or components configured in the terminal equipment, contents same as the embodiments of the first aspect are not repeated.

FIG. 9 is a schematic diagram of a CSI report configuration apparatus in the embodiments of the present disclosure. As shown in FIG. 9, a CSI report configuration apparatus 900 includes:
a receiving unit 901 configured to receive a first resource configuration, the first resource configuration being at least used for configuring first reference signal resources with M ports,
the receiving unit 901 being configured to further receive channel state information (CSI) report configuration, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.

In some embodiments, the channel state information (CSI) report configuration is per cell and/or per carrier component; the first reference signal resources and/or the second reference signal resources are at least time-domain resources and/or frequency-domain resources and/or spatial-domain resources for transmitting or receiving reference signals.

In some embodiments, the second reference signal resource with the N port is a part of the first reference signal resource with the M port; the first reference signal resources with the M ports and the second reference signal resources with the N ports are non-zero power channel state information reference signal (CSI-RS) resources for channel measurement.

In some embodiments, as shown in FIG. 9, the apparatus further includes:
a processing unit 902 configured to perform first CSI measurement based on the first reference signal resources with the M ports to generate the first CSI; and perform second CSI measurement based on the second reference signal resources with the N ports to generate the second CSI.

In some embodiments, the channel state information (CSI) report configuration includes first information, the first information being used for configuring or indicating the first reference signal resources with the M ports and/or the second reference signal resources with the N ports; and
the first information is associated with the first resource configuration and/or the second resource configuration.

In some embodiments, the channel state information (CSI) report configuration further includes second information, the second information being used to indicate the number of pieces of channel state information (CSI).

In some embodiments, the channel state information (CSI) report configuration further includes third information, the third information being used to indicate a mapping relationship between the channel state information (CSI) and channel state information (CSI) reference signal resources.

In some embodiments, the channel state information (CSI) report configuration further includes fourth information, the fourth information being used to indicate a channel state information (CSI) feedback quantity; and
the channel state information feedback quantity indicated by the fourth information is different from a channel state information feedback quantity to which the first resource configuration corresponds.

In some embodiments, as shown in FIG. 9, the apparatus further includes:
a transmitting unit 903 configured to perform CSI reporting, a CSI report including the first channel state information and/or the second channel state information.

In some embodiments, in a case where the first reference signal resources with the M ports overlap with the second reference signal resources with the N ports, the CSI report includes the first channel state information and the second channel state information.

In some embodiments, in a case where the first reference signal resources with the M ports overlap with the second reference signal resources with the N ports, the CSI report includes the second channel state information.

In some embodiments, in a case where the first reference signal resources with the M ports do not overlap with the second reference signal resources with the N ports, the CSI report includes the first channel state information and the second channel state information.

In some embodiments, the first resource configuration and/or the channel state information (CSI) report configuration is/are carried by radio resource control (RRC) signaling and/or a media access control (MAC) control element (CE).

In some embodiments, the receiving unit 901 further receives fifth information and/or sixth information, and determines channel state information (CSI) report associated with the first reference signal resources with the M ports and/or the second reference signal resources with the N ports according to the fifth information and/or sixth information.

In some embodiments, the fifth information is carried by downlink control information (DCI) and/or a media access control (MAC) control element (CE), and the sixth information is carried by RRC and/or a media access control (MAC) control element (CE).

In some embodiments, the fifth information is used to indicate at least one of the following: a network state, that a terminal equipment performs channel state information (CSI) reporting, that the terminal equipment performs channel state information (CSI) reporting associated with the first reference signal resources with the M ports, that the terminal equipment performs channel state information (CSI) reporting associated with the second reference signal resources with the N ports, update/adjustment/switching of channel state information (CSI) report setting, update/adjustment/switching of CSI-RS resource configuration, CSI-RS port adjustment, CSI-RS port activation/deactivation indication, CSI-RS port enable indication, CSI measurement adjustment, a discontinuous transmission indication, or a discontinuous reception indication; and
the sixth information is used to indicate at least one of the following: a timer/counter related to a network state, a discontinuous transmission period configuration related to a network state, or a discontinuous reception period configuration related to a network state.

In some embodiments, the network state indicates at least one of the following: a first mode, a second mode, switching from the first mode to the second mode, switching from the second mode to the first mode, time-domain element adjustment, spatial-domain element adjustment, or energy-domain element adjustment.

In some embodiments, the first mode is at least one of the following: an energy-saving mode, a power-saving mode, a dormant mode, an abnormal mode, or an inactive mode; and the second mode is at least one of the following: a non-energy-saving mode, a non-power-saving mode, a non-dormant mode, a normal mode, or an active mode; and
the spatial-domain element indicates at least one of the following: an antenna port, a logical port, a reference signal port, an antenna factor, an antenna element, or an antenna unit; and the energy-domain element indicates at least one of the following: energy per resource element of a physical downlink shared channel (PDSCH), or energy per resource element of a channel state information reference signal.

It's worth noting that the above only describes components or modules related to the present disclosure, but the present disclosure is not limited to this. The CSI report configuration apparatus 900 may further include other components or modules. For detailed contents of these components or modules, relevant technologies may be referred to.

Moreover, for the sake of simplicity, FIG. 9 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Through the embodiments of the present disclosure, a terminal equipment receives channel state information (CSI) report configuration that is used to configure report of first channel state information (CSI) and/or second channel state information (CSI), the first channel state information (CSI) being associated with the first reference signal resources with the M ports, and the second channel state information (CSI) being associated with second reference signal resources with N ports. Thereby, even in the case of resource adjustment (for example, for the purpose of energy saving), the terminal equipment is capable of performing CSI reporting efficiently and accurately without additionally increasing the number of channel state information (CSI) report configurations, so as to provide accurate channel information for the scheduling of the network device.

### Embodiments of a fourth aspect

Embodiments of the present disclosure provide a CSI report configuration apparatus. The apparatus may be a network device, or may be one or more parts or components configured in the network device. The contents same as the embodiments of the first to third aspects are not repeated.

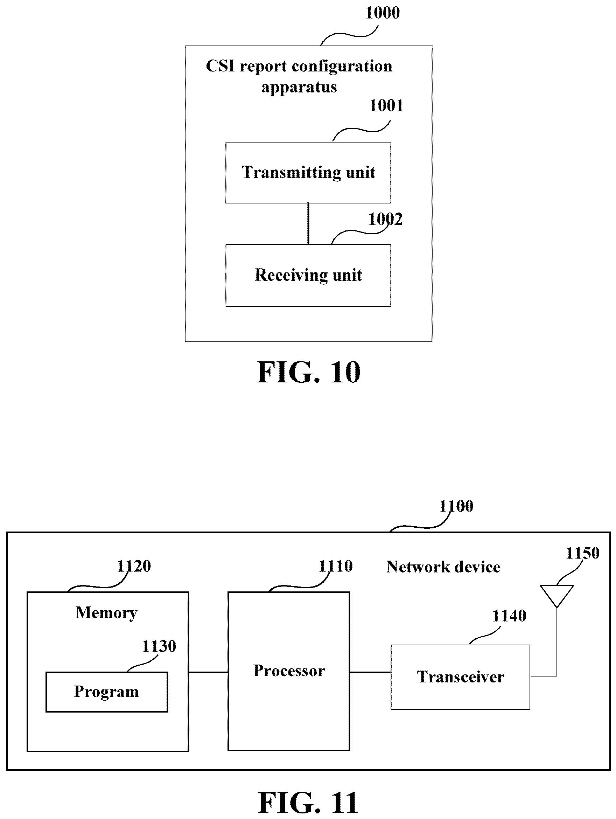

FIG. 10 is a schematic diagram of a CSI report configuration apparatus in the embodiments of the present disclosure. As shown in FIG. 10, a CSI report configuration apparatus 1000 includes:
a transmitting unit 1001 configured to transmit a first resource configuration to a terminal equipment, the first resource configuration being at least used for configuring first reference signal resources with M ports,
the transmitting unit 1001 being configured to further transmit channel state information (CSI) report configuration to the terminal equipment, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.

In some embodiments, the channel state information (CSI) report configuration includes first information, the first information being used for configuring or indicating the first reference signal resources with the M ports and/or the second reference signal resources with the N ports.

In some embodiments, the first information is associated with the first resource configuration and/or the second resource configuration.

In some embodiments, the channel state information (CSI) report configuration further includes second information, the second information being used to indicate the number of pieces of channel state information (CSI).

In some embodiments, the channel state information (CSI) report configuration further includes third information, the third information being used to indicate a mapping relationship between the channel state information (CSI) and channel state information (CSI) reference signal resources.

In some embodiments, the channel state information (CSI) report configuration further includes fourth information, the fourth information being used to indicate a channel state information (CSI) feedback quantity.

In some embodiments, the channel state information feedback quantity indicated by the fourth information is different from a channel state information feedback quantity to which the first resource configuration corresponds.

In some embodiments, as shown in FIG. 10, the apparatus further includes:
a receiving unit 1002 configured to receive CSI report from the terminal equipment, the CSI report including the first channel state information and/or the second channel state information.

In some embodiments, in a case where the first reference signal resources with the M ports overlap with the second reference signal resources with the N ports, the CSI report includes the first channel state information and the second channel state information.

In some embodiments, in a case where the first reference signal resources with the M ports overlap with the second reference signal resources with the N ports, the CSI report includes the second channel state information.

In some embodiments, in a case where the first reference signal resources with the M ports do not overlap with the second reference signal resources with the N ports, the CSI report includes the first channel state information and the second channel state information.

In some embodiments, the first resource configuration and/or the channel state information (CSI) report configuration is/are carried by radio resource control (RRC) signaling and/or a media access control (MAC) control element (CE).

In some embodiments, the transmitting unit 1001 further transmits fifth information and/or sixth information to the terminal equipment;
wherein the terminal equipment determines channel state information (CSI) report associated with the first reference signal resources with the M ports and/or the second reference signal resources with the N ports according to the fifth information and/or sixth information.

In some embodiments, the fifth information is carried by downlink control information (DCI) and/or a media access control (MAC) control element (CE), and the sixth information is carried by RRC and/or a media access control (MAC) control element (CE).

In some embodiments, the fifth information is used to indicate at least one of the following: a network state, that a terminal equipment performs channel state information (CSI) reporting, that the terminal equipment performs channel state information (CSI) reporting associated with the first reference signal resources with the M ports, that the terminal equipment performs channel state information (CSI) reporting associated with the second reference signal resources with the N ports, update/adjustment/switching of channel state information (CSI) report setting, update/adjustment/switching of CSI-RS resource configuration, CSI-RS port adjustment, CSI-RS port activation/deactivation indication, CSI-RS port enable indication, CSI measurement adjustment, a discontinuous transmission indication, or a discontinuous reception indication; and
the sixth information is used to indicate at least one of the following: a timer/counter related to a network state, a discontinuous transmission period configuration related to a network state, or a discontinuous reception period configuration related to a network state.

In some embodiments, the network state indicates at least one of the following: a first mode, a second mode, switching from the first mode to the second mode, switching from the second mode to the first mode, time-domain element adjustment, spatial-domain element adjustment, or energy-domain element adjustment.

In some embodiments, the first mode is at least one of the following: an energy-saving mode, a power-saving mode, a dormant mode, an abnormal mode, or an inactive mode; and the second mode is at least one of the following: a non-energy-saving mode, a non-power-saving mode, a non-dormant mode, a normal mode, or an active mode.

In some embodiments, the spatial-domain element indicates at least one of the following: an antenna port, a logical port, a reference signal port, an antenna factor, an antenna element, or an antenna unit; and the energy-domain element indicates at least one of the following: energy per resource element of a physical downlink shared channel (PDSCH), or energy per resource element of a channel state information reference signal.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The CSI report configuration apparatus 1000 may further include other components or modules. For detailed contents of these components or modules, relevant technologies may be referred to.

Moreover, for the sake of simplicity, FIG. 10 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Through the embodiments of the present disclosure, a terminal equipment receives channel state information (CSI) report configuration that is used to configure report of first channel state information (CSI) and/or second channel state information (CSI), the first channel state information (CSI) being associated with the first reference signal resources with the M ports, and the second channel state information (CSI) being associated with second reference signal resources with N ports. Thereby, even in the case of resource adjustment (for example, for the purpose of energy saving), the terminal equipment is capable of performing CSI reporting efficiently and accurately without additionally increasing the number of channel state information (CSI) report configurations, so as to provide accurate channel information for the scheduling of the network device.

### Embodiments of a fifth aspect

Embodiments of the present disclosure further provide a communication system, FIG.1 may be referred to, the contents same as the embodiments of the first to fourth aspects are not repeated.

In some embodiments, the communication system 100 at least may include:
a network device configured to transmit a first resource configuration, the first resource configuration being at least used for configuring first reference signal resources with M ports, and transmit channel state information (CSI) report configuration, wherein the channel state information (CSI) report configuration is used to configure report of first channel state information (CSI) and/or second channel state information (CSI); and
a terminal equipment configured to receive the first resource configuration and the channel state information (CSI) report configuration, wherein the first channel state information (CSI) is associated with the first reference signal resources with the M ports, and the second channel state information (CSI) is associated with second reference signal resources with N ports; where, N is less than M.

Embodiments of the present disclosure further provide a network device, for example may be a base station, but the present disclosure is not limited to this, it may also be other network device.

FIG. 11 is a composition schematic diagram of a network device in the embodiments of the present disclosure. As shown in FIG. 11, the network device 1100 may include: a processor 1110 (such as a central processing unit (CPU)) and a memory 1120; the memory 1120 is coupled to the processor 1110. The memory 1120 may store various data; moreover, also stores a program 1130 for information processing, and executes the program 1130 under the control of the processor 1110.

For example, the processor 1110 may be configured to execute a program to implement the CSI report configuration method as described in the embodiments of the second aspect. For example, the processor 1110 may be configured to perform the following control: transmitting a first resource configuration to a terminal equipment, the first resource configuration being at least used for configuring first reference signal resources with M ports; transmitting channel state information (CSI) report configuration to the terminal equipment, wherein the channel state information (CSI) report configuration is used to configure report of first channel state information (CSI) and/or second channel state information (CSI), the first channel state (CSI) information being associated with the first reference signal resources with the M ports, and the second channel state (CSI) information being associated with second reference signal resources with N ports; where, N is less than M.

In addition, as shown in FIG. 11, the network device 1100 may further include: a transceiver 1140 and an antenna 1150, etc.; wherein the functions of said components are similar to relevant arts, which are not repeated here. It's worth noting that the network device 1100 does not have to include all the components shown in FIG. 11. Moreover, the network device 1100 may further include components not shown in FIG. 11, relevant arts may be referred to.

Embodiments of the present disclosure further provide a terminal equipment, but the present disclosure is not limited to this, it may also be other device.

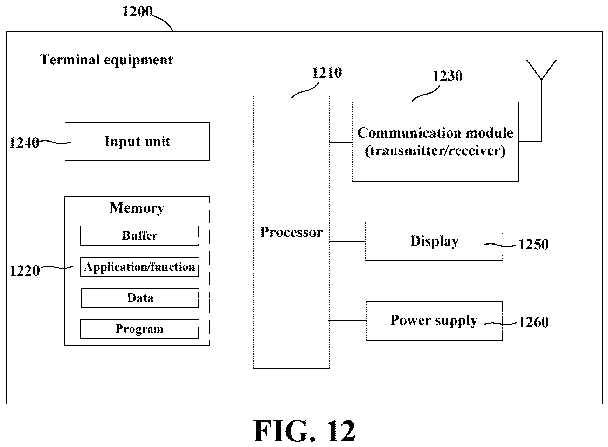

FIG. 12 is a schematic diagram of a terminal equipment in the embodiments of the present disclosure. As shown in FIG. 12, the terminal equipment 1200 may include a processor 1210 and a memory 1220; the memory 1220 stores data and programs, and is coupled to the processor 1210. It's worth noting that this figure is exemplary; other types of structures can also be used to supplement or replace this structure, so as to realize a telecommunication function or other functions.

For example, the processor 1210 may be configured to execute a program to implement the CSI report configuration method as described in the embodiments of the first aspect. For example, the processor 1210 may be configured to perform the following control: receiving a first resource configuration, the first resource configuration being at least used for configuring first reference signal resources with M ports; receiving channel state information (CSI) report configuration, wherein the channel state information (CSI) report configuration is used to configure report of first channel state information (CSI) and/or second channel state information (CSI), the first channel state (CSI) information being associated with the first reference signal resources with the M ports, and the second channel state (CSI) information being associated with second reference signal resources with N ports; where, N is less than M.

As shown in FIG. 12, the terminal equipment 1200 may further include: a communication module 1230, an input unit 1240, a display 1250 and a power source 1260. The functions of said components are similar to prior arts, which are not repeated here. It's worth noting that the terminal equipment 1200 does not have to include all the components shown in FIG. 12, said components are not indispensable. Moreover, the terminal equipment 1200 may further include components not shown in FIG. 12, relevant arts may be referred to.

Embodiments of the present disclosure further provide a computer program, wherein when a terminal equipment executes the program, the program enables the terminal equipment to execute the channel state information report configuration method described in the embodiments of the first aspect.

Embodiments of the present disclosure further provide a storage medium in which a computer program is stored, wherein the computer program enables a terminal equipment to execute the channel state information report configuration method described in the embodiments of the first aspect.

Embodiments of the present disclosure further provide a computer program, wherein when a network device executes the program, the program enables the network device to execute the channel state information report configuration method described in the embodiments of the second aspect.

Embodiments of the present disclosure further provide a storage medium in which a computer program is stored, wherein the computer program enables a network device to execute the channel state information report configuration method described in the embodiments of the second aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

As for the implementations including the above embodiments, the following supplements are further disclosed:
1. A CSI report configuration method, including:
   a terminal equipment receives a first resource configuration, the first resource configuration being at least used for configuring first reference signal resources with M ports; and
   the terminal equipment receives channel state information (CSI) report configuration, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.
2. The method according to Supplement 1, wherein the channel state information (CSI) report configuration is per cell and/or per component carrier (per CC).
3. The method according to Supplement 1, wherein the first reference signal resources and/or the second reference signal resources are at least time-domain resources and/or frequency-domain resources and/or spatial-domain resources for transmitting or receiving reference signals.
4. The method according to Supplement 1, wherein the second reference signal resources with the N ports are a part of the first reference signal resources with the M ports.
5. The method according to Supplement 1, wherein the first reference signal resources with the M ports and the second reference signal resources with the N ports are non-zero power channel state information reference signal (CSI-RS) resources for channel measurement.
6. The method according to any one of Supplements 1 to 5, wherein the method further includes:
   the terminal equipment performs first CSI measurement based on the first reference signal resources of the M ports to generate the first CSI; and
   the terminal equipment performs second CSI measurement based on the second reference signal resources of the N ports to generate the second CSI.
7. The method according to any one of Supplements 1 to 6, wherein the channel state information (CSI) report configuration includes first information, the first information being used for configuring or indicating the first reference signal resources with the M ports and/or the second reference signal resources with the N ports.
8. The method according to Supplement 7, wherein the first information is associated with the first resource configuration and/or the second resource configuration.
9. The method according to any one of Supplements 1 to 8, wherein the channel state information (CSI) report configuration further includes second information, the second information being used to indicate the number of pieces of channel state information (CSI).
10. The method according to any one of Supplements 1 to 9, wherein the channel state information (CSI) report configuration further includes third information, the third information being used to indicate a mapping relationship between the channel state information (CSI) and channel state information (CSI) reference signal resources.
11. The method according to any one of Supplements 1 to 10, wherein the channel state information (CSI) report configuration further includes fourth information, the fourth information being used to indicate a channel state information (CSI) feedback quantity.
12. The method according to Supplement 11, wherein the channel state information feedback quantity indicated by the fourth information is different from a channel state information feedback quantity to which the first resource configuration corresponds.
13. The method according to any one of Supplements 1 to 12, wherein the method further includes:
   the terminal equipment performs CSI reporting, a CSI report including the first channel state information and/or the second channel state information.
14. The method according to Supplement 13, wherein in a case where the first reference signal resources with the M ports overlap with the second reference signal resources with the N ports, the CSI report includes the first channel state information and the second channel state information.
15. The method according to Supplement 13, wherein in a case where the first reference signal resources with the M ports overlap with the second reference signal resources with the N ports, the CSI report includes the second channel state information.
16. The method according to Supplement 13, wherein in a case where the first reference signal resources with the M ports do not overlap with the second reference signal resources with the N ports, the CSI report includes the first channel state information and the second channel state information.
17. The method according to any one of Supplements 1 to 16, wherein the method further includes:
   the terminal equipment determines the first reference signal resources with the M ports according to a first parameter, and the first resource configuration at least includes the first parameter.
18. The method according to Supplement 17, wherein the method further includes:
   the terminal equipment determines the second reference signal resources with the N ports according to the first parameter and a second parameter, wherein the second parameter is included in the first resource configuration or the channel state information (CSI) report configuration.
19. The method according to Supplement 18, wherein the second parameter is used to indicate that N ports in the M ports of the first reference signal resources are the second reference signal resources;
   or, the second parameter indicates or enables the resources corresponding to some ports in the first reference signal resources with the M ports as the second reference signal resources with the N ports.
20. The method according to Supplement 19, wherein the first resource configuration and/or the CSI report configuration include(s) at least one second parameter, the at least one second parameter being used to configure at least one second reference signal resource.
21. The method according to Supplement 17, wherein the method further includes:
   the terminal equipment determines the second reference signal resources with the N ports according to the first parameter and a third parameter, the third parameter being included in a second resource configuration.
22. The method according to Supplement 21, wherein the third parameter includes CSI-RS resource configuration index information of the second parameter and/or a reference resource.
23. The method according to Supplement 17, wherein the method further includes: the terminal equipment determines the second reference signal resources with the N ports according to the first parameter and a fourth parameter, wherein the fourth parameter is included in the second resource configuration.
24. The method according to Supplement 21 or 23, wherein the terminal equipment receives at least one second resource configuration, the at least one second resource configuration being used to configure at least one second reference signal resource.
25. The method according to any one of Supplements 1 to 24, wherein the terminal equipment determines at least one of the following according to a preset rule and/or a predetermined parameter: the number of pieces of channel state information (CSI) report, a mapping relationship between channel state information (CSI) report and a channel state information (CSI) reference signal resource, a type of a feedback quantity of channel state information (CSI), or a type of field mapping of channel state information (CSI).
26. The method according to any one of Supplements 1 to 25, wherein the first resource configuration and/or the channel state information (CSI) report configuration is/are carried by radio resource control (RRC) signaling and/or a media access control (MAC) control element (CE).
27. The method according to any one of Supplements 1 to 26, wherein the second reference signal resources with the N ports and/or the second CSI associated with them is/are configured via UE-specific signaling, or is/are configured via cell-specific signaling, or is/are configured via group-specific signaling.
28. The method according to any one of Supplements 1 to 27, wherein the method further includes:
   the terminal equipment receives fifth information and/or sixth information; and
   determines channel state information (CSI) report associated with the first reference signal resources with the M ports and/or the second reference signal resources with the N ports according to the fifth information and/or sixth information.
29. The method according to Supplement 28, wherein the fifth information is carried by downlink control information (DCI) and/or a media access control (MAC) control element (CE), and the sixth information is carried by RRC and/or a media access control (MAC) control element (CE).
30. The method according to Supplement 28, wherein the fifth information is used to indicate at least one of the following: a network state, that a terminal equipment performs channel state information (CSI) reporting, that the terminal equipment performs channel state information (CSI) reporting associated with the first reference signal resources with the M ports, that the terminal equipment performs channel state information (CSI) reporting associated with the second reference signal resources with the N ports, update/adjustment/switching of channel state information (CSI) report setting, update/adjustment/switching of CSI-RS resource configuration, CSI-RS port adjustment, CSI-RS port activation/deactivation indication, CSI-RS port enable indication, CSI measurement adjustment, a discontinuous transmission indication, or a discontinuous reception indication; and
   the sixth information is used to indicate at least one of the following: a timer/counter related to a network state, a discontinuous transmission period configuration related to a network state, or a discontinuous reception period configuration related to a network state.
31. The method according to Supplement 30, wherein the network state indicates at least one of the following: a first mode, a second mode, switching from the first mode to the second mode, switching from the second mode to the first mode, time-domain element adjustment, spatial-domain element adjustment, or energy-domain element adjustment.
32. The method according to Supplement 31, wherein the first mode is at least one of the following: an energy-saving mode, a power-saving mode, a dormant mode, an abnormal mode, or an inactive mode; and the second mode is at least one of the following: a non-energy-saving mode, a non-power-saving mode, a non-dormant mode, a normal mode, or an active mode.
33. The method according to Supplement 31, wherein the spatial-domain element indicates at least one of the following: an antenna port, a logical port, a reference signal port, an antenna factor, an antenna element, or an antenna unit; and
   the energy-domain element indicates at least one of the following: energy per resource element of a physical downlink shared channel (PDSCH), or energy per resource element of a channel state information reference signal.
34. A CSI report configuration method, including:
   a network device transmits a first resource configuration to a terminal equipment, the first resource configuration being at least used for configuring first reference signal resources with M ports; and
   the network device transmits channel state information (CSI) report configuration to the terminal equipment, wherein the channel state information (CSI) report configuration is used to configure report of first channel state information (CSI) and/or second channel state information (CSI), the first channel state information (CSI) being associated with the first reference signal resources with the M ports, and the second channel state information (CSI) being associated with second reference signal resources with N ports; where, N is less than M.
35. The method according to Supplement 34, wherein the channel state information (CSI) report configuration includes first information, the first information being used for configuring or indicating the first reference signal resources with the M ports and/or the second reference signal resources with the N ports.
36. The method according to Supplement 35, wherein the first information is associated with the first resource configuration and/or the second resource configuration.
37. The method according to any one of Supplements 34 to 36, wherein the channel state information (CSI) report configuration further includes second information, the second information being used to indicate the number of pieces of channel state information (CSI).
38. The method according to any one of Supplements 34 to 37, wherein the channel state information (CSI) report configuration further includes third information, the third information being used to indicate a mapping relationship between the channel state information (CSI) and channel state information (CSI) reference signal resources.
39. The method according to any one of Supplements 34 to 38, wherein the channel state information (CSI) report configuration further includes fourth information, the fourth information being used to indicate a channel state information (CSI) feedback quantity.
40. The method according to Supplement 39, wherein the channel state information feedback quantity indicated by the fourth information is different from a channel state information feedback quantity to which the first resource configuration corresponds.
41. The method according to any one of Supplements 34 to 40, wherein the method further includes:
   the network device receives CSI report from the terminal equipment, the CSI report including the first channel state information and/or the second channel state information.
42. The method according to Supplement 41, wherein in a case where the first reference signal resources with the M ports overlap with the second reference signal resources with the N ports, the CSI report includes the first channel state information and the second channel state information.
43. The method according to Supplement 41, wherein in a case where the first reference signal resources with the M ports overlap with the second reference signal resources with the N ports, the CSI report includes the second channel state information.
44. The method according to Supplement 41, wherein in a case where the first reference signal resources with the M ports do not overlap with the second reference signal resources with the N ports, the CSI report includes the first channel state information and the second channel state information.
45. The method according to any one of Supplements 34 to 44, wherein the first resource configuration and/or the channel state information (CSI) report configuration is/are carried by radio resource control (RRC) signaling and/or a media access control (MAC) control element (CE).
46. The method according to any one of Supplements 34 to 45, wherein the second reference signal resources with the N ports and/or the second CSI associated with them is/are configured via UE-specific signaling, or is/are configured via cell-specific signaling, or is/are configured via group-specific signaling.
47. The method according to any one of Supplements 34 to 46, wherein the method further includes:
   the network device transmits fifth information and/or sixth information to the terminal equipment;
   wherein the terminal equipment determines channel state information (CSI) report associated with the first reference signal resources with the M ports and/or the second reference signal resources with the N ports according to the fifth information and/or sixth information.
48. The method according to Supplement 47, wherein the fifth information is carried by downlink control information (DCI) and/or a media access control (MAC) control element (CE), and the sixth information is carried by RRC and/or a media access control (MAC) control element (CE).
49. The method according to Supplement 47, wherein the fifth information is used to indicate at least one of the following: a network state, that a terminal equipment performs channel state information (CSI) reporting, that the terminal equipment performs channel state information (CSI) reporting associated with the first reference signal resources with the M ports, that the terminal equipment performs channel state information (CSI) reporting associated with the second reference signal resources with the N ports, update/adjustment/switching of channel state information (CSI) report setting, update/adjustment/switching of CSI-RS resource configuration, CSI-RS port adjustment, CSI-RS port activation/deactivation indication, CSI-RS port enable indication, CSI measurement adjustment, a discontinuous transmission indication, or a discontinuous reception indication; and
   the sixth information is used to indicate at least one of the following: a timer/counter related to a network state, a discontinuous transmission period configuration related to a network state, or a discontinuous reception period configuration related to a network state.
50. The method according to Supplement 49, wherein the network state indicates at least one of the following: a first mode, a second mode, switching from the first mode to the second mode, switching from the second mode to the first mode, time-domain element adjustment, spatial-domain element adjustment, or energy-domain element adjustment.
51. The method according to Supplement 50, wherein the first mode is at least one of the following: an energy-saving mode, a power-saving mode, a dormant mode, an abnormal mode, or an inactive mode; and the second mode is at least one of the following: a non-energy-saving mode, a non-power-saving mode, a non-dormant mode, a normal mode, or an active mode.
52. The method according to Supplement 50, wherein the spatial-domain element indicates at least one of the following: an antenna port, a logical port, a reference signal port, an antenna factor, an antenna element, or an antenna unit; and
   the energy-domain element indicates at least one of the following: energy per resource element of a physical downlink shared channel (PDSCH), or energy per resource element of a channel state information reference signal.
53. A terminal equipment, including a memory and a processor, the memory storing a computer program, and the processor being configured to execute the computer program to implement the channel state information report configuration method according to any one of Supplements 1 to 33.
54. A network device, including a memory and a processor, the memory storing a computer program, and the processor being configured to execute the computer program to implement the channel state information report configuration method according to any one of Supplements 34 to 52.

## Claims

1. A channel state information report configuration apparatus, comprising:
a receiving unit configured to receive a first resource configuration, the first resource configuration being at least used for configuring first reference signal resources with M ports,
the receiving unit being configured to further receive channel state information report configuration, wherein the channel state information report configuration is used to configure report of first channel state information and/or second channel state information, the first channel state information being associated with the first reference signal resources with the M ports, and the second channel state information being associated with second reference signal resources with N ports; where, N is less than M.

2. The apparatus according to claim 1, wherein the channel state information report configuration is per cell and/or per carrier component; and
the first reference signal resources and/or the second reference signal resources are at least time-domain resources and/or frequency-domain resources and/or spatial-domain resources for transmitting or receiving reference signals.

3. The apparatus according to claim 1, wherein the second reference signal resources with the N ports are a part of the first reference signal resources with the M ports; and
the first reference signal resources with the M ports and the second reference signal resources with the N ports are non-zero power channel state information reference signal resources for channel measurement.

4. The apparatus according to claim 1, wherein the apparatus further comprises:
a processing unit configured to perform first channel state information measurement based on the first reference signal resources with the M ports to generate the first channel state information, and perform second channel state information measurement based on the second reference signal resources with the N ports to generate the second channel state information.

5. The apparatus according to claim 1, wherein the channel state information report configuration comprises first information, the first information being used for configuring or indicating the first reference signal resources with the M ports and/or the second reference signal resources with the N ports, and the first information is associated with the first resource configuration and/or the second resource configuration.

6. The apparatus according to claim 1, wherein the channel state information report configuration further comprises second information, the second information being used to indicate the number of pieces of channel state information.

7. The apparatus according to claim 1, wherein the channel state information report configuration further comprises third information, the third information being used to indicate a mapping relationship between the channel state information and channel state information reference signal resources.

8. The apparatus according to claim 1, wherein the channel state information report configuration further comprises fourth information, the fourth information being used to indicate a channel state information feedback quantity, and
the channel state information feedback quantity indicated by the fourth information is different from a channel state information feedback quantity to which the first resource configuration corresponds.

9. The apparatus according to claim 1, wherein the apparatus further comprises:
a transmitting unit configured to perform channel state information reporting, a channel state information report comprising the first channel state information and/or the second channel state information.

10. The apparatus according to claim 9, wherein in a case where the first reference signal resources with the M ports overlap with the second reference signal resources with the N ports, the channel state information report comprises the first channel state information and the second channel state information.

11. The apparatus according to claim 9, wherein in a case where the first reference signal resources with the M ports overlap with the second reference signal resources with the N ports, the channel state information report comprises the second channel state information.

12. The apparatus according to claim 9, wherein in a case where the first reference signal resources with the M ports do not overlap with the second reference signal resources with the N ports, the channel state information report comprises the first channel state information and the second channel state information.

13. The apparatus according to claim 1, wherein the first resource configuration and/or channel state information report configuration is/are carried by radio resource control signaling and/or a media access control control element.

14. The apparatus according to claim 1, wherein the receiving unit is further configured to receive fifth information and/or sixth information, and determine/switch channel state information report associated with the first reference signal resources with the M ports and/or the second reference signal resources with the N ports according to the fifth information and/or sixth information.

15. The apparatus according to claim 14, wherein the fifth information is carried by downlink control information and/or a media access control control element, and the sixth information is carried by RRC and/or a media access control control element.

16. The apparatus according to claim 14, wherein the fifth information is used to indicate at least one of the following: a network state, that a terminal equipment performs channel state information reporting, that the terminal equipment performs channel state information reporting associated with the first reference signal resources with the M ports, that the terminal equipment performs channel state information reporting associated with the second reference signal resources with the N ports, update/adjustment/switching of channel state information report, update/adjustment/switching of channel state information reference signal resources, channel state information reference signal port adjustment, channel state information reference signal port activation/deactivation indication, channel state information reference signal port enable indication, channel state information measurement adjustment, a discontinuous transmission indication, or a discontinuous reception indication;
information on the update/adjustment/switching of the channel state information report being used to indicate the number of channel information reports and/or specific channel state information after the update/adjustment/switching, the specific channel state information being the first channel state information and/or the second state information; and
the sixth information is used to indicate at least one of the following: a timer/counter related to a network state, a discontinuous transmission period configuration related to a network state, or a discontinuous reception period configuration related to a network state.

17. The apparatus according to claim 16, wherein the network state indicates at least one of the following: a first mode, a second mode, switching from the first mode to the second mode, switching from the second mode to the first mode, time-domain element adjustment, spatial-domain element adjustment, or energy-domain element adjustment.

18. The apparatus according to claim 17, wherein the first mode is at least one of the following: an energy-saving mode, a power-saving mode, a dormant mode, an abnormal mode, or an inactive mode; and the second mode is at least one of the following: a non-energy-saving mode, a non-power-saving mode, a non-dormant mode, a normal mode, or an active mode; and
the spatial-domain element indicates at least one of the following: an antenna port, a logical port, a reference signal port, an antenna factor, an antenna element, or an antenna unit; and the energy-domain element indicates at least one of the following: energy per resource element of a physical downlink shared channel, or energy per resource element of a channel state information reference signal.

19. A channel state information report configuration apparatus, comprising:
a transmitting unit configured to transmit a first resource configuration to a terminal equipment, the first resource configuration being at least used for configuring first reference signal resources with M ports,
the transmitting unit being configured to further transmit channel state information report configuration to the terminal equipment, wherein the channel state information report configuration is used to configure report of first channel state information and/or second channel state information, the first channel state information being associated with the first reference signal resources with the M ports, and the second channel state information being associated with second reference signal resources with N ports; where, N is less than M.

20. A communication system comprising:
a network device configured to transmit a first resource configuration, the first resource configuration being at least used for configuring first reference signal resources with M ports, and transmit channel state information report configuration, wherein the channel state information report configuration is used to configure report of first channel state information and/or second channel state information; and
a terminal equipment configured to receive the first resource configuration and the channel state information report configuration, wherein the first channel state information is associated with the first reference signal resources with the M ports, and the second channel state information is associated with second reference signal resources with N ports; where, N is less than M.
